# EUROPÄISCHE PATENTANMELDUNG

(11) **EP 1 500 994 A1**
(43) Veröffentlichungstag der Anmeldung: **26.01.2005**
(21) Anmeldenummer: 03016734.0
(22) Anmeldetag: 22.07.2003
(51) Int. Cl.: G05B 19/418

(54) **Kopplungsvorrichtung für drei Bussysteme**

(71) Anmelder: SIEMENS AKTIENGESELLSCHAFT, 80333 München (DE)
(72) Erfinder: Gehlen, Patrick, 91077 Grossenbuch (DE); Krämer, Werner, 92421 Schwandorf (DE); Wiesgickl, Bernhard, 92249 Vilseck (DE); Wunschik, Roman, 91054 Erlangen (DE)

(57) **Zusammenfassung**

Bussysteme sollen komfortabler gekoppelt werden können. Hierzu wird eine Kopplungsvorrichtung (1) vorgeschlagen, mit der zwei Feldbusse (F1, F2) mit einem Peripheriebus (P) gekoppelt werden. Über den Peripheriebus (P) können Eingabe/Ausgabe-Bausteine (3, 4) zur zentralen Überwachung beziehungsweise Verarbeitung von Daten angeschlossen werden. Vorzugsweise ist die Kopplungsvorrichtung (1) konfigurierbar hinsichtlich des Transfers von Standarddaten (S) und sicherheitsrelevanten Daten (F) zwischen den drei Bussystemen (F1, F2, P).

## Beschreibung

Die vorliegende Erfindung betrifft eine Kopplungsvorrichtung für Datenbusse mit einer ersten Anschlusseinrichtung für einen ersten Datenbus, einer zweiten Anschlusseinrichtung für einen zweiten, von dem ersten verschiedenen Datenbus und einer Datenverarbeitungseinrichtung, die mit der ersten und zweiten Anschlusseinrichtung verbunden ist, um einen Datenaustausch zwischen den Datenbussen zu ermöglichen.

Bei zahlreichen Anwendungen besteht der Bedarf, verschiedene Bussysteme zu koppeln. Bei der Datenübertragung zwischen den Bussystemen soll dabei häufig zwischen Standarddaten und sicherheitsrelevanten Daten unterschieden werden.

Zur Kopplung verschiedener Bussysteme werden bekanntermaßen sogenannte Links verwendet. Diese Links sind jedoch nicht konfigurierbar. Ferner sind zur Eingabe beziehungsweise Ausgabe von Daten unmittelbar an einem Link Eingabe/Ausgabe-Baugruppen (I/Os) an eines der beiden Bussysteme anzuschließen. Dies verursacht zusätzliche Kosten, reduziert die Reaktionszeiten und belastet die Rechenleistung der speicherprogrammierbaren Steuerungen (SPS). Diese Nachteile wirken sich besonders auf Baugruppen für sicherheitsrelevante Daten aus, da dort entsprechend hohe Reaktionszeiten gefordert sind.

Die Aufgabe der vorliegenden Erfindung besteht somit darin, eine Kopplungsvorrichtung für Bussysteme vorzuschlagen, bei der die Ein- und Ausgabe von Daten in unmittelbarer Nähe der Vorrichtung möglich ist, ohne die Reaktionszeiten des Systems wesentlich zu reduzieren beziehungsweise das System wesentlich zu belasten.

Erfindungsgemäß wird diese Aufgabe gelöst durch eine Kopplungsvorrichtung für Datenbusse mit einer ersten Anschlusseinrichtung für einen ersten Datenbus, einer zweiten Anschlusseinrichtung für einen zweiten, vom ersten verschiedenen Datenbus und einer Datenverarbeitungseinrichtung, die mit der ersten und zweiten Anschlusseinrichtung verbunden ist, um einen Datenaustausch zwischen den Datenbussen zu ermöglichen, sowie einer dritten Anschlusseinrichtung, die ebenfalls mit der Datenverarbeitungseinrichtung verbunden ist, für einen dritten, von dem ersten und zweiten verschiednen Datenbus, so dass ein Datenaustausch zwischen den drei Datenbussen möglich ist.

Erfindungsgemäß ist es damit möglich, dass ein zentraler Baustein auf Daten von drei oder mehr Bussystemen zugreift.

Vorteilhafterweise ist die erfindungsgemäße Kopplungsvorrichtung konfigurierbar. Insbesondere kann damit eine Konfiguration ermöglicht werden, mit der eine Unterscheidung der Daten durchführbar ist, welche zwischen den Bussystemen übertragen werden sollen. Insbesondere kann die Kopplungsvorrichtung derart konfiguriert werden, dass der Datentransfer zwischen zweien oder dreien der Datenbusse in Abhängigkeit von der Semantik der zu übertragenden Daten steuerbar ist. So ist es beispielsweise möglich, die Übertragung von Standarddaten anders zu gestalten als die Übertragung von sicherheitsrelevanten Daten.

Der erste Datenbus, an den die Kopplungsvorrichtung angeschlossen wird, kann ein sogenannter Profibus sein. Der zweite Datenbus kann beispielsweise ein AS-i-Bus sein.

Der dritte Datenbus, an den die erfindungsgemäße Kopplungsvorrichtung anschließbar ist, kann ein Peripheriebus sein, an den Eingabe/Ausgabe-Module angeschlossen werden können. Mittels dieser Module können Daten am Link ein- und ausgegeben werden. Die Eingabe/Ausgabe-Module können durch den Link bzw. die Kopplungsvorrichtung mit den anderen Datenbussen verknüpft werden. Der dritte Datenbus kann aber dazu verwendet werden, um mehrere Kopplungsvorrichtungen miteinander zu verbinden.

In die Kopplungsvorrichtung kann ein Monitor zur Überwachung der Konfigurationseinstellungen beziehungsweise des Datentransfers integriert sein. Insbesondere sollen durch den Monitor sicherheitsrelevante Daten erkannt und weiterverarbeitet werden.

Die vorliegende Erfindung wird nun anhand der beigefügten Zeichnungen näher erläutert, in denen zeigen:
- FIG 1: ein Prinzipschaltbild einer erfindungsgemäßen Kopplungsvorrichtung;
- FIG 2: ein Datenflussdiagramm einer erfindungsgemäßen Kopplungsvorrichtung;
- FIG 3: ein Datenflussdiagramm einer Kopplung mehrerer Feldbussysteme;
- FIG 4: ein Datenflussdiagramm eines Kopplers mit Eingabe/Ausgabe-Baugruppen;
- FIG 5: ein Datenflussdiagramm eines Kopplers von zwei Feldbussystemen ohne weitere Beschaltung; und
- FIG 6: ein Konfigurationsbeispiel gemäß dem Datenflussdiagramm von FIG 4.

Die nachfolgend näher beschriebenen Ausführungsbeispiele stellen bevorzugte Ausführungsformen der vorliegenden Erfindung dar.

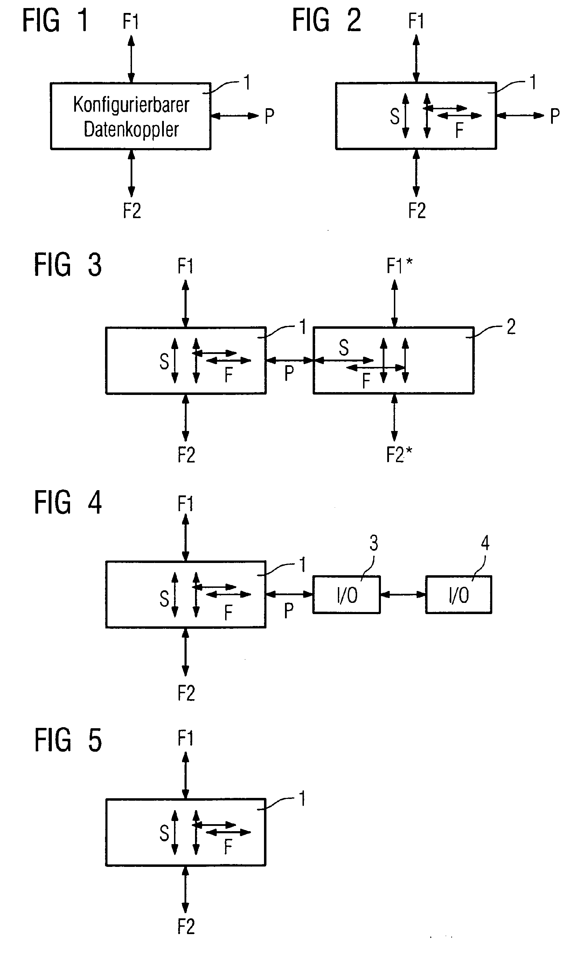

Gemäß FIG 1 kann die erfindungsgemäße Kopplungsvorrichtung beziehungsweise der erfindungsgemäße Datenkoppler 1 zwischen zwei Feldbusse F1 und F2 geschaltet werden. Des Weiteren besitzt der Datenkoppler 1 einen Anschluss an einen internen Peripheriebus P. Über den internen Peripheriebus P ist der Datenkoppler 1 hinsichtlich des Datentransfers zwischen den Feldbussen F1 und F2 sowie des Datentransfers zwischen dem Peripheriebus und den Feldbussen konfigurierbar.

In FIG 2 ist der Datenfluss wiedergegeben, der zwischen den drei Bussen F1, F2 und P möglich ist. Neben Standarddaten S können auch sicherheitsrelevante Daten F unter den Datenbussen ausgetauscht werden. In diesem Fall können die sicherheitsrelevanten Daten und/oder Standarddaten der Busse F1 und F2 über eine Ausgabeeinheit am Peripheriebus ausgegeben werden und/oder sicherheitsrelevante Daten und/oder Standarddaten über eine Eingabeeinheit vom Peripheriebus eingelesen werden und an die Busse F1 und/oder F2 weitergeleitet werden.

In FIG 3 ist die Kopplung zweier Feldbussysteme F1, F2 und F1*, F2* über den Peripheriebus P dargestellt. Hierzu sind ein erster Datenkoppler 1 und ein zweiter Datenkoppler 2 über ihre Peripheriebusschnittstelle miteinander verbunden. Demzufolge können sämtliche vier Feldbusse F1, F2, F1* und F2* Standarddaten S und sicherheitsrelevante Daten F miteinander austauschen. Auch hier sind die beiden Datenkoppler 1 und 2 hinsichtlich des Datentransfers von Standarddaten und sicherheitsrelevanten Daten beliebig konfigurierbar.

In FIG 4 ist das Datenflussdiagramm einer besonders bevorzugten Konfiguration wiedergegeben. Der Datenkoppler 1 ist über den Peripheriebus P mit mehreren Eingabe/Ausgabe-Baugruppen 3, 4 verbunden. Über diese Baugruppen 3, 4 können Informationen aus den anderen Bussen ausgegeben oder in diese eingegeben werden. Eine entsprechende Konfiguration ermöglicht nicht nur die oben genannte Festlegung der Daten, die zwischen den angeschlossenen Datenbussen übertragen werden, sondern erlaubt auch eine individuelle Vor-Ort-Verarbeitung der Daten. Bei entsprechender Ausgestaltung der Hard- und Software können auch sicherheitsrelevante Daten übertragen beziehungsweise verarbeitet werden.

Durch den direkten Anschluss der Eingabe/Ausgabe-Baugruppen 3, 4 über den Peripheriebus P an den Datenkoppler 1 kann auf den Anschluss solcher Baugruppen an die Feldbusse F1 und F2 in der Nähe des Datenkopplers 1 verzichtet werden. Damit kann beispielsweise die SPS eines Profibusses entlastet werden.

FIG 5 zeigt das Datenflussdiagramm eines reinen Kopplers, mit dem die Feldbusse F1 und F2 gekoppelt sind. Der Datentransfer zwischen beiden Bussen ist wie bei den vorhergehenden Ausführungsbeispielen über den konfigurierbaren Datenkoppler 1 einstellbar. Weitere Eingabe/Ausgabe-Baugruppen sind hier nicht vorgesehen.

Wie die obigen Ausführungsbeispiele zeigen, kann die Kopplung mehrerer Bussysteme erfindungsgemäß sehr flexibel gestaltet werden. Des Weiteren können die Systemkosten reduziert werden, da der Verdrahtungsaufwand reduziert wird.

Darüber hinaus werden die Reaktionszeiten bei dem erfindungsgemäßen System verkürzt, da keine Eingabe/Ausgabe-Baugruppen zwischen dem Datenkoppler und dem SPS eines Profibusses angeordnet sind. Ferner ist die SPS entlastet, wenn keine zusätzlichen I/Os in dem Profibus angeordnet sind. Außerdem kann mit dem konfigurierbaren Datenkoppler eine Vielzahl unterschiedlicher Gerätevarianten mit wenig Aufwand aufgebaut werden. Beispiele hierfür sind, wie teilweise bereits erwähnt, ein einfacher Koppler, ein Koppler für sicherheitsrelevante Daten und konfigurierbare I/Os für sicherheitsrelevante Daten.

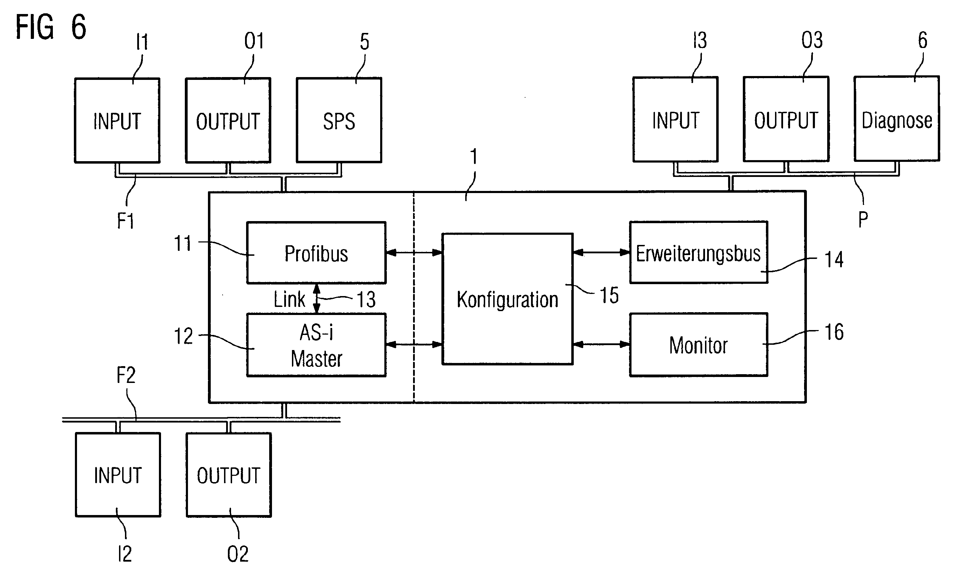

FIG 6 gibt ein konkretes Ausführungsbeispiel mehrerer Datenbusse, die mit der erfindungsgemäßen Kopplungsvorrichtung verbunden sind, wieder. Der Datenkoppler 1 besitzt eine Profibus-Schnittstelle 11 zu einem Profibus als Feldbus F1 und einen AS-i-Master 12 als Schnittstelle zu einem AS-i-Bus als Feldbus F2. Die Profibus-Schnittstelle 11 und der AS-i-Master 12 sind über ein Link 13 miteinander verbunden. Eine Erweiterungs- beziehungsweise Peripheriebusschnittstelle 14 dient zum Anschluss des Datenkopplers 1 an den Peripheriebus P. Sämtliche Schnittstellen 11, 12 und 14 sind über eine interne Konfigurationseinheit 15 konfigurierbar. Der Datenkoppler 1 verfügt außerdem über einen Monitor 16, mit dem die Konfiguration beziehungsweise der Datentransfer überwachbar ist.

An den Profibus F1 sind in bekannter Weise ein Eingabebaustein I1 und ein Ausgabebaustein O1 sowie eine SPS 5 angeschlossen. In ähnlicher Weise ist an den AS-i-Bus F2 ein Eingabebaustein I2 und ein Ausgabebaustein 02 angeschlossen. Ferner sind ein Eingabebaustein I3 und ein Ausgabebaustein 03 sowie eine Diagnoseeinheit 6 an den Peripheriebus P angeschlossen. Die am Peripheriebus P befindlichen Komponenten sind über den Datenkoppler 1 konfigurierbar.

Mit der erfindungsgemäßen Kopplungsvorrichtung können somit neben einem Profibus/AS-I-Bus-Link mit interner Kommunikationsschnittstelle auch ein reiner AS-i-Sicherheitsmonitor mit interner Kommunikationsschnittstelle zum Anschluss weiterer I/O-Module mit beliebig vielen Ausgängen realisiert werden. Darüber hinaus sind - wie teilweise bereits vorgestellt - mit der erfindungsgemäßen Kopplungsvorrichtung AS-i-Sicherheitsmonitore mit interner Kommunikationsschnittstelle zum Anschluss weiterer I/O-Module sowie mit Profibusanschluss als Konfigurationsschnittstelle und Diagnoseeinheit oder mit AS-i-Anschluss oder mit Profibus/Profisafe- und AS-i-Anschluss realisierbar. Der sogenannte Profisafe ermöglicht auch die Übertragung sicherheitsrelevanter Daten. Schließlich können mit den erfindungsgemäßen Kopplungsvorrichtungen, die jeweils mindestens drei Busanschlüsse aufweisen, Datennetze mit beliebiger Anzahl an Bussystemen realisiert werden.

## Patentansprüche

1. Kopplungsvorrichtung für Datenbusse mit
- einer ersten Anschlusseinrichtung (11) für einen ersten Datenbus (F1),
- einer zweiten Anschlusseinrichtung (12) für einen zweiten, vom ersten verschiedenen Datenbus (F2) und
- einer Datenverarbeitungseinrichtung (13, 15), die mit der ersten und zweiten Anschlusseinrichtung (11, 12) verbunden ist, um einen Datenaustausch zwischen den Datenbussen (F1, F2) zu ermöglichen,
**gekennzeichnet durch**
- eine dritte Anschlusseinrichtung (14), die ebenfalls mit der Datenverarbeitungseinrichtung (13, 15) verbunden ist, für einen dritten, von dem ersten und zweiten verschiedenen Datenbus (P), so dass ein Datenaustausch zwischen den drei Datenbussen (F1, F2, P) möglich ist.

2. Kopplungsvorrichtung nach Anspruch 1, die konfigurierbar ist.

3. Kopplungsvorrichtung nach Anspruch 2, die derart konfigurierbar ist, dass der Datentransfer zwischen zweien oder dreien der Datenbusse (F1, F2, P) in Abhängigkeit von der Semantik der zu übertragenden Daten steuerbar ist.

4. Kopplungsvorrichtung nach einem der vorhergehenden Ansprüche, wobei der erste Datenbus (F1) ein Profibus ist.

5. Kopplungsvorrichtung nach einem der vorhergehenden Ansprüche, wobei der zweite Datenbus (F2) ein AS-i-Bus ist.

6. Kopplungsvorrichtung nach einem der vorhergehenden Ansprüche, wobei an den dritten Datenbus (P) Eingabe/Ausgabe-Module (I3, O3) anschließbar sind, die mit Hilfe der Kopplungsvorrichtung (1) mit dem ersten und/oder zweiten Datenbus verknüpfbar sind.

7. Kopplungsvorrichtung nach einem der vorhergehenden Ansprüche, die einen Monitor (16) mit Konfigurationsmöglichkeit aufweist.
